# EUROPÄISCHE PATENTSCHRIFT

(11) **EP 1 805 432 B1**
(45) Veröffentlichungstag und Bekanntmachung des Hinweises auf die Patenterteilung: **01.12.2010**
(21) Anmeldenummer: 05857753.7
(22) Anmeldetag: 28.09.2005
(51) Int. Cl.: F16F 15/134

(54) **ZWEIMASSENSCHWUNGRAD**
DUAL MASS FLYWHEEL
ROUE VOLANTE A DEUX MASSES

(30) Priorität: 23.10.2004 DE 102004051702
(43) Veröffentlichungstag der Anmeldung: 11.07.2007
(73) Patentinhaber: Schaeffler Technologies GmbH & Co. KG, 91074 Herzogenaurach (DE)
(72) Erfinder: MENDE, Hartmut, 77815 Bühl (DE)
(86) Internationale Anmeldenummer: PCT/DE2005/001721
(87) Internationale Veröffentlichungsnummer: WO 2006/042495

(56) Entgegenhaltungen:
- DE-A1- 19 603 248
- US-A- 4 160 390
- US-A- 5 564 680

## Beschreibung

Die vorliegende Erfindung betrifft einen Drehschwingungsdämpfer gemäß dem Oberbegriff von Anspruch 1.

In den vergangenen Jahren hat sich das Prinzip des Zweimassenschwungrades weiter überzeugend bewährt und blieb weiter konkurrenzlos das Instrument zur Drehschwingungsdämpfung im Antriebsstrang.

Aus der DE-OS 36 10 127 ist beispielsweise eine drehelastische schwingungsdämpfende Kupplung bekannt geworden, die als Zweimassenschwungrad ausgebildet ist, wobei zwischen der mit einem Antriebsmotor verbindbaren Primärschwungmasse und der mit einem Getriebe über eine Kupplung verbindbaren Sekundärschwungmasse drehelastische bzw. schwingungsdämpfende Elemente zwischengeschaltet sind, welche eine Relativverdrehung zwischen den beiden Schwungmassen ermöglichen. Die drehelastischen Elemente sind dabei durch Schraubenfedern aufweisende Energiespeicher gebildet. Diese Energiespeicher werden bei einer Relativverdrehung zwischen den beiden Schwungmassen durch die an diesen vorgesehenen Beaufschlagungsbereichen komprimiert. Dabei können zwischen den Beaufschlagungsbereichen und den Schraubenfedern Abdeckplatten vorgesehen sein, an denen sich die jeweilige Schraubenfeder abstützt. Weiterhin ist in diesem Dokument vorgeschlagen worden, einen langen Kraftspeicher zu verwenden, der durch in einer Kammer hintereinander angeordnete Federn gebildet ist. Zwischen den in einer Kammer eingelegten Federn werden keilförmige Zwischenstücke vorgesehen.

Aus der DE-OS 37 21 711 und der DE-OS 37 21 712 sind weiterhin Federnäpfe bzw. Abstützstücke für die Endbereiche von langen Federn bekannt geworden, die einen Ansatz aufweisen, der derart ausgebildet ist, dass dieser auch bei einem Austreten aus dem Endbereich der entsprechenden Feder sich wieder in diesen Endbereich einfädeln kann. Derartige Federnäpfe können bei im Wesentlichen im Querschnitt geschlossenen bzw. an den Außendurchmesser der Federn angepassten Aufnahmen Verwendung finden.

Eine weitere Vorrichtung dieser Art ist aus der dem Oberbegriff des Anspruchs 1 entsprechenden DE 196 03 248 A1 bekannt. Dabei wird ein Federsockel bzw. ein Zwischenstück verliersicher mit dem benachbarten Endbereich wenigstens einer Feder verbunden. Dadurch kann gewährleistet werden, dass der Federsockel stets eine für die Beaufschlagung der Feder optimale Position beibehält. Die Festlegung von Federsockeln bzw. Abstützbauteilen für Schraubenfedern von Drehschwingungsdämpfern kann in besonders vorteilhafter Weise bei Verwendung von Energiespeichern, die aus mehreren in Serie wirksamen und praktisch unmittelbar hintereinander vorgesehenen Schraubenfedern bestehen, Verwendung finden. Derartige Federsockel bzw. Abstützbauteile können in vorteilhafter Weise zwischen den zugewandten Endbereichen bzw. Endwindungen der in Serie wirksamen Federn vorgesehen werden. Dadurch wird eine einwandfreie Abstützung zwischen den in Serie geschalteten Federn gewährleistet und es können bei Bedarf darüber hinaus in zumindest einer der in Serie geschalteten Schraubenfedern eine Innenschraubenfeder angeordnet werden, die ebenfalls über den wenigstens einen als Zwischenabstützbauteil wirksamen Sockel beaufschlagt werden kann.

Eine weitere Vorrichtung dieser Art ist aus der DE 198 34 728 A1 bekannt. Dabei können anstatt der zuvor üblichen relativ teuren Wälzlager erstmals preiswertere Gleitlager auch in der Großserie eingesetzt werden, die aufgrund von Gleitlagerbuchsen innerhalb eines was Reib- bzw. Gleitverhältnisse anbetrifft engen Toleranzbandes bleiben können.

Bei einer weiteren Variante, wie sie beispielsweise aus der DE 102 41 879 A1 bekannt ist, werden Rollumlaufschuhe verwendet. Dabei kann metallischer Abrieb in einem viskosen Medium den Sitz und die Beweglichkeit der Kugeln in den Rollumlaufschuhen beeinträchtigen.

Bei den bislang bekannten Drehschwingungsdämpfern kommt es zwischen den Energiespeichern - häufig als Schraubendruckfedern ausgeführt - und den sie entlang ihrer Windungen fassenden oder berührenden Bauelementen wie etwa einem Verschleißschutz zu Reibung.

Handelt es sich um eine Ausführungsform, bei der Schraubenfedern über ihre Längserstreckung betrachtet ineinander geschachtelt sind, so kann es auch zwischen ihnen zu Reibung kommen. Die Reibung kann zu Abrieb an den Oberflächen der beteiligten Bauteile führen. Zur Verringerung dieser Reibung bzw. des Abriebs sind die Energiespeicher mindestens teilweise auch von viskosem Medium wie beispielsweise Fett umgeben. Auch dort, wo die Energiespeicher auf die Beaufschlagungsbereiche stoßen, kann Abrieb entstehen.

In diesem viskosen Medium reichert sich der Abrieb an. Dies kann insbesondere bei Ausführungsformen mit Rollumlaufschuhen zu einer Fettverschmutzung der Laufstrecke des Umlaufschuhs führen, was zu einem Herausfallen von Kugeln aus dem Umlaufschuh führen kann. Im Falle von Gleitschuhen aber auch in allen anderen Ausführungsformen erhöht der metallische Abrieb selbst die Reibung.

Der vorliegenden Erfindung liegt nun die Aufgabe zugrunde, ein Zweimassenschwungrad derart weiterzubilden, dass durch geeignete Maßnahmen die Verschmutzung des viskosen Mediums insbesondere im Bereich der Laufstrecke der Kugeln in den Rollumlaufschuhen verringert wird.

Diese Aufgabe wird durch einen Drehschwingungsdämpfer mit den Merkmalen gemäß Anspruch 1 gelöst.

Erfindungsgemäß wird also der ferromagnetische Anteil des Abriebs mittels Magnetismus an solchen Stellen des Drehschwingungsdämpfers angesammelt, die außerhalb der Laufstrecke der Energiespeicher, der Umlauf- bzw. der Gleitschuhe liegen. Um die Fliehkraft ausnutzen zu können, liegen diese Bereiche vorteilhafterweise radial außen. Eine solche Stelle liegt insbesondere im Bereich der Beaufschlagungsbereiche oder radial außerhalb des Außenumfangs des flanschartigen Beaufschlagungsmittels.

Die den ferromagnetischen Anteil des Abriebs an die bevorzugte Stelle ziehende magnetische Wirkung kann durch das Vorsehen eines magnetischen Bereiches an einer Aufnahme, Aussparung, einem Flansch oder Sockel erfolgen, die am Drehschwingungsdämpfer im Bereich dieser Stelle, beispielsweise an einem der Beaufschlagungsbereiche, vorgesehen sind. Insbesondere kann hierzu an diesen Stellen ein Magnet oder ein magnetisches oder magnetisierbares Bauteil fixiert werden.

Alternativ können bereits vorhandene Teile des Drehschwingungsdämpfers an der entsprechenden Stelle magnetisiert werden.

Mit dem erfindungsgemäßen Drehschwingungsdämpfer gelingt es, die Lebensdauer und die Ausfallsicherheit von Teilen des Drehschwingungsdämpfers, die in Reibkontakt zu anderen Teilen stehen, zu erhöhen, da die Reibung und damit der Verschleiß an diesen Stellen herabgesetzt wird.

Die anziehende Wirkung des Magnetismus kann auch dazu genutzt werden, den Halt zwischen den flanschartigen Beaufschlagungsmitteln und den auf sie stoßenden Energiespeichern zu verbessern, so dass Beaufschlagungsmittel und Energiespeicher seltener den direkten Kontakt verlieren und es folglich seltener zu einem Wiederaufschlag des Energiespeichers auf das Beaufschlagungsmittel kommt.

Durch den Einsatz der abstoßenden Wirkung des Magnetismus kann ein solcher Aufschlag gedämpft werden.

Die abstoßende Wirkung des Magnetismus kann auch zur Verringerung der Reibung in einem axialen Gleitlager, wie es in der DE 198 34 729 A1 offenbart ist, beitragen, indem zumindest ein Teil der axialen Ausrückkraft durch die abstoßende Wirkung des Magnetismus abgestützt wird, wodurch die aneinander reibenden Flächen sich mit weniger Druck oder gar nicht mehr berühren.

Bevorzugt ist ein Bauelement, in das ein magnetisches Bauteil eingebettet ist, im Umfeld des magnetischen Bauteils aus einem nicht magnetischen Werkstoff oder es sind das umgebende Bauelement und das magnetische Bauteil von einer Schicht aus nicht magnetischem, idealerweise den Magnetismus abschirmenden Material getrennt.

Die vorliegende Erfindung betrifft weiterhin ein gemäß Anspruch 9 definiertes Verfahren zur Verminderung der Wirksamkeit von Abriebteilchen in einem Drehschwingungsdämpfer gemäß Anspruch 1.

Weitere Vorteile und vorteilhafte Ausgestaltungen der Erfindung sind Gegenstand der abhängigen Ansprüche und der nachfolgenden Figuren sowie deren Beschreibung.

Es zeigen im Einzelnen:
Fig. 1: Schnitt durch eine in Teilen dargestellte Dämpfungseinrichtung
Fig. 2: teilweise dargestellten Schnitt gemäß der Linie II/II der Fig. 1

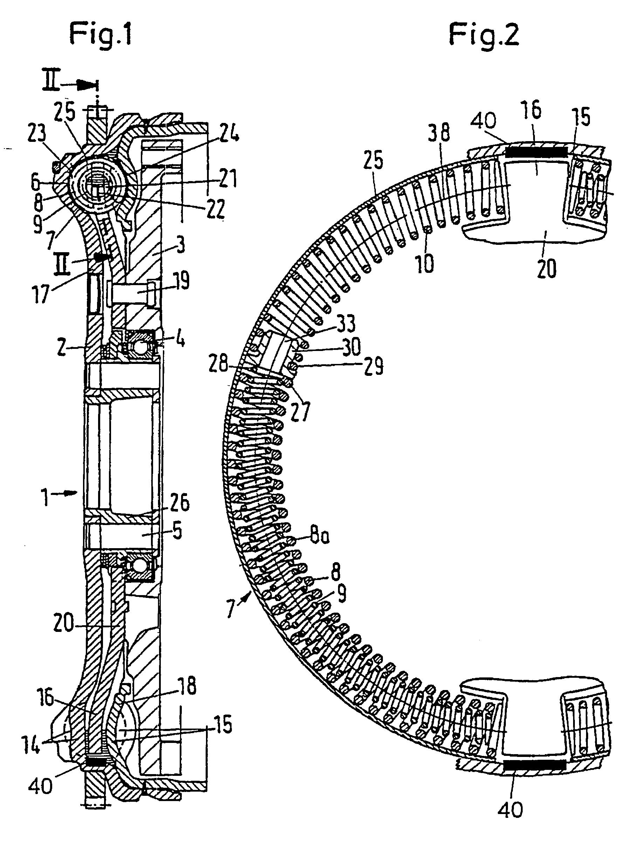

Der in Figur 1 und 2 teilweise dargestellte Drehschwingungsdämpfer besitzt ein geteiltes Schwungrad 1, das eine an einer nicht gezeigten Abtriebswelle einer Brennkraftmaschine befestigbare erste oder Primärschwungmasse 2 sowie eine zweite oder Sekundärschwungmasse 3 aufweist. Auf der zweiten Schwungmasse 3 ist eine Reibungskupplung unter Zwischenlegung einer Kupplungsscheibe befestigbar, über die eine ebenfalls nicht dargestellte Eingangswelle eines Getriebes zu- und abkuppelbar ist. Die Schwungmassen 2 und 3 sind über eine Lagerung 4 zueinander verdrehbar gelagert, die bei dem dargestellten Ausführungsbeispiel radial außerhalb von Bohrungen 5 zur Durchführung von Befestigungsschrauben für die Montage der ersten Schwungsmasse 2 an der Abtriebswelle einer Brennkraftmaschine angeordnet ist. Zwischen den beiden Schwungmassen 2 und 3 ist eine Dämpfungseinrichtung 6 wirksam, die Energiespeicher 7 umfasst, von denen zumindest einer durch Schraubendruckfedern 8, 9, 10 gebildet ist. Wie insbesondere aus Figur 2 ersichtlich ist, ist die Schraubendruckfeder 9 in dem durch die Windungen 8a der Feder 8 gebildeten Raum aufgenommen oder mit anderen Worten die beiden Schraubenfedern 8 und 9 sind über ihre Längserstreckung betrachtet ineinander geschachtelt. Mit den beiden parallel wirksamen Schraubenfedern 8, 9 ist die Schraubenfeder 10 wirkungsmäßig in Serie geschaltet. Obwohl bei dem dargestellten Ausführungsbeispiel gemäß Figur 2 keine Innenfeder vorgesehen ist, könnte für manche Anwendungsfälle eine derartige Innenfeder von Vorteil sein. Diese ist dann in ähnlicher Art und Weise in der Feder 10 aufgenommen wie die Innenfeder 9 in der Außenfeder 8. Auch kann es für manche Anwendungsfälle zweckmäßig sein, wenn lediglich die Außenfeder 8 vorgesehen wird, also die Innenfeder 9 entfällt.

Die beiden Schwungmassen 2 und 3 besitzen Beaufschlagungsbereiche 14, 15 bzw. 16 für die Energiespeicher 7. Bei dem dargestellten Ausführungsbeispiel sind die Beaufschlagungsbereiche 14, 15 durch in die die erste Schwungmasse 2 bildenden Blechteile 17, 18 eingebrachte Prägungen gebildet. Die axial zwischen den Beaufschlagungsbereichen 14, 15 vorgesehenen Beaufschlagungsbereiche 16 sind durch zumindest ein mit der Sekundärmasse 3, beispielsweise über Niete 19 verbundenes flanschartiges Beaufschlagungsbauteil 20 gebildet. Dieses Bauteil 20 dient als Drehmomentübertragungselement zwischen den Energiespeichern 7 und der Schwungmasse 3. Die Beaufschlagungsbereiche 16 sind durch am Außenumfang des flanschartigen Beaufschlagungsmittels 20 vorgesehene radiale Arme bzw. Ausleger 16 gebildet.

Radial außen ist das Bauteil 17 mit dem Bauteil 18 verbunden. Die beiden Bauteile 17 und 18 bilden eine ringförmige Kammer 21, die einen torusartigen Bereich 22 aufweist. Die ringförmige Kammer 21 bzw. der torusartige Bereich 22 ist zumindest teilweise mit einem viskosen Medium, wie beispielsweise Fett, gefüllt. In Umfangsrichtung betrachtet zwischen den Anformungen bzw. den Beaufschlagungsbereichen 14, 15 bilden die Bauteile 17, 18 Ausbuchtungen 23, 24, die den torusartigen Bereich 22 begrenzen und die Energiespeicher 7 aufnehmen sowie sowohl in radialer als auch in axialer Richtung führen.

Zumindest bei rotierender Einrichtung 1 stützen sich die Windungen der Federn 8 und 10 an den torusartigen Bereich 22 radial außen begrenzenden Bereichen des Bauteiles 17 und/oder 18 ab. Bei dem dargestellten Ausführungsbeispiel ist ein durch wenigstens eine gehärtete Blechzwischenlage bzw. Blecheinlage gebildeter Verschleißschutz 25 vorgesehen, an dem sich die Federn 8 und 10 radial abstützen. Der Verschleißschutz 25 erstreckt sich in Umfangsrichtung in vorteilhafter Weise zumindest über die gesamte Länge bzw. Winkelerstreckung der entspannten Energiespeicher 7. Infolge der fliehkraftmäßigen Abstützung der Windungen der Federn 8 und 10 wird zwischen diesen Windungen und den mit diesen in Reibeingriff stehenden Bauteilen eine drehzahlabhängige Reibungsdämpfung bei einer Längenänderung bzw. Kompression der Energiespeicher 7 bzw. der Kraftspeicher 8 und 10 erzeugt.

Radial innen trägt das sich radial erstreckende Bauteil 17 ein Zwischenteil bzw. eine Nabe 26, das bzw. die den inneren Lagerring des Kugellagers 4 aufnimmt bzw. trägt. Der äußere Lagerring des Kugellagers 4 trägt die Schwungmasse 3.

Wie insbesondere aus Figur 2 ersichtlich ist, sind die Beaufschlagungsbereiche 16 winkelmäßig kleiner ausgebildet als die Beaufschlagungsbereiche 14, 15, so dass ausgehend von der in Figur 2 dargestellten theoretischen Ruhestellung bzw. Ausgangsstellung eine geringe Verdrehung in beide Drehrichtungen der Schwungmassen 2 und 3 zueinander ohne Federwirkung möglich ist.

Zwischen den einander zugewandten bzw. benachbarten Endwindungen 27, 28 einerseits und 29 andererseits der Federn 8, 9 und 10 ist, wie in Figur 2 ersichtlich ist, ein Zwischenstück 30 vorgesehen, das als Federsockel bzw. Federsitz bezeichnet werden kann und zur Abstützung der Endwindungen 27, 28, 29 bzw. der Endbereiche der Feder 8, 9 und 10 dient. Wie aus Figur 2 ersichtlich ist, besitzen die Energiespeicher 7 bzw. die diese bildenden Schraubenfedern 8, 9, 10 an ihren den Beaufschlagungsbereichen 14, 15, 16 zugewandten Endbereichen keine Abstützbauteile bzw. Federsockel. Es könnte jedoch zumindest an einem der Enden der Energiespeicher 7 ein Abstützbauteil oder Federsockel vorgesehen werden. Bei dem dargestellten Ausführungsbeispiel ist das Abstützbauteil 30 hohl ausgebildet, besitzt also eine Ausnehmung 33.

In der ringförmigen Kammer 21 befindet sich mindestens ein magnetisierter Bereich 40, von dem eine anziehende Wirkung auf einen metallischen Abrieb ausgeht. Dieser Abrieb befindet sich aufgrund von Reibeingriffen - insbesondere zwischen den Federn 8, 10 und dem Verschleißschutz 25 - im viskosen Medium und sammelt sich um den magnetisierten Bereich 40 an.

Dieser magnetische Bereich 40 kann im Bereich der Arme 16 oder der Beaufschlagungsbereiche 14,15 vorgesehen sein.

Die magnetische Wirkung des magnetischen Bereiches 40 wird entweder durch das Einfügen eines Magneten oder eines Bauteils mit magnetischen Eigenschaften erzielt oder es werden bereits vorhandene Teile des Drehschwingungsdämpfers magnetisiert.

Wird ein Magnet oder ein magnetisches Bauteil vorgesehen, so kann in der ringförmigen Kammer 21 radial außerhalb der Arme 16 an einem die Kammer bildenden Bauteil, eine Aufnahme, Aussparung, Flansch oder Sockel vorgesehen werden, wo das magnetische Bauteil fixiert werden kann.

Das magnetische Bauteil 40 ist bevorzugt so geformt, dass nach seiner Fixierung noch ein radialer Abstand zu den Armen 16 besteht, so dass diese es nicht direkt berühren und so noch Raum für den sich ansammelnden Abrieb ist.

Damit der Abrieb sich nicht im Bereich der Energiespeicher und insbesondere nicht im Bereich der Laufstrecke der Kugeln der Rollumlaufschuhe ansammelt, kann das magnetische Bauteil so geformt werden, dass seine maximale Ausdehnung in Umfangrichtung der Kammer 21 durch die in beiden Richtungen nächstgelegenen Beaufschlagungsbereiche, an denen der Bereich der Energiespeicher wieder beginnt, begrenzt ist. Damit entspricht seine winkelmäßige Ausdehnung etwa der der gegenüberliegenden Arme 16 des Flansches 20 in Umfangrichtung.

Alternativ oder zusätzlich kann sich in den Bereichen, radial außerhalb der Arme 16, auch eine Bohrung befinden, durch die eine magnetisierte Schraube von Außen in die ringförmige Kammer eingebracht werden kann, so dass das viskose Medium dicht eingeschlossen ist und während des Betriebs nicht aus dem Drehschwingungsdämpfer austreten kann. In diesem Fall können bei Servicearbeiten die magnetischen Schrauben herausgenommen und der sich dort angesammelte metallische Abrieb kann entfernt werden oder gegebenenfalls das verschmutzte viskose Medium ganz gegen neues ausgetauscht werden.

Die erfindungsgemäße Verwendung von magnetisierbaren Bereichen kann auch in vorteilhafter Weise bei Drehschwingungsdämpfern Verwendung finden, bei denen die Federn über Wälzkörper radial abgestützt werden. Derartige Drehschwingungsdämpfer sind beispielsweise durch die o.g. DE 102 41 879 A1 bekannt geworden.

Dabei können die magnetisierbaren Bereiche an zweckmäßigen Stellen der Umlaufschuhe vorgesehen werden, so dass die Funktion der Wälzkörper durch die angesammelten ferromagnetischen Abriebteilchen nicht beeinträchtigt wird und/oder der Halt der Wälzkörper im Trägerelement verbessert wird.

### Bezugszeichenliste

- 1: Drehschwingungsdämpfer mit geteiltem Schwungrad
- 2: erste oder Primärschwungmasse
- 3: zweite oder Sekundärschwungmasse
- 4: Lagerung
- 5: Bohrungen
- 6: Dämpfungseinrichtung
- 7: Energiespeicher
- 8: Schraubendruckfeder
- 8a: Windungen der Feder 8
- 9: Schraubendruckfeder
- 10: Schraubendruckfeder
- 14: Beaufschlagungsbereich für die Energiespeicher 7
- 15: Beaufschlagungsbereich für die Energiespeicher 7
- 16: Beaufschlagungsbereich für die Energiespeicher 7
- 17: Bauteil, das mit Bauteil 18 die Schwungmasse 2 bildet
- 18: Bauteil, das mit Bauteil 17 die Schwungmasse 2 bildet
- 19: Niete
- 20: flanschartiges Beaufschlagungsbauteil zur Drehmomentübertragung zwischen den Energiespeichern 7 und der Schwungmasse 3
- 21: ringförmige Kammer, die die beiden Bauteile 17 und 18 bilden, zumindest teilweise mit einem viskosen Medium, wie beispielsweise Fett, gefüllt
- 22: torusartiger Bereich, den die ringförmige Kammer 21 aufweist, zumindest teilweise mit einem viskosen Medium, wie beispielsweise Fett, gefüllt
- 23: Ausbuchtung von Bauteil 17, die zusammen mit Ausbuchtung 24 den torusartigen Be- reich 22 begrenzen und die Energiespeicher 7 aufnehmen
- 24: Ausbuchtung von Bauteil 18, die zusammen mit Ausbuchtung 23 den torusartigen Be- reich 22 begrenzen und die Energiespeicher 7 aufnehmen
- 25: Verschleißschutz
- 26: Nabe
- 27: Endwindung bzw. Endbereich der Feder 8
- 28: Endwindung bzw. Endbereich der Feder 9
- 29: Endwindung bzw. Endbereich der Feder 10
- 30: Zwischenstück, das als Federsockel bzw. Federsitz bezeichnet werden kann und zur Abstützung der Endbereiche der Federn 8, 9 einerseits und 10 andererseits dient
- 33: Ausnehmung - bei dem dargestellten Ausführungsbeispiel ist das Zwischenstück 30 hohl
- 40: magnetisches Bauteil - bei dem dargestellten Ausführungsbeispiel ist ein magneti- sches Bauteil in der ringförmigen Kammer 21 in einer Aufnahme fixiert.

## Patentansprüche

1. Drehschwingungsdämpfer mit wenigstens einem ersten (17) und einem zweiten (18) Bauelement, wobei das erste und zweite Bauelement entgegen dem Widerstand von zumindest einem Energiespeicher verdrehbar sind und die Bauelemente Beaufschlagungsbereiche zur Komprimierung des durch wenigstens eine Schraubenfeder (8, 9, 10) gebildeten Energiespeichers (7) besitzen, wobei eines der Bauelemente Bestandteile aufweist, die eine ringförmige Kammer (21) bilden, in der die Schraubenfeder aufgenommen ist und die zumindest teilweise mit viskosem Medium befüllt ist, wobei das erste Bauelement mit einer Abtriebswelle eines Motors verbindbar ist und das zweite Bauelement mit einer Getriebewelle verbindbar ist, wobei eines der Bauelemente ein flanschartiges Bauteil (20) umfasst, das zumindest mit radial äußeren Bereichen (16) zur Beaufschlagung der zumindest einen Schraubenfeder in die ringförmige Kammer (21) des zweiten Bauelements eingreift, wobei in der Ruhestellung des Drehschwingungsdämpfers, den äußeren Bereichen (16) benachbarte Beaufschlagungsbereiche der die Kammer (21) bildenden Bestandteile vorhanden sind, **dadurch gekennzeichnet, dass** in der Kammer (21) zumindest ein magnetisierter Bereich (40) existiert, der ferromagnetische Stoffe anzieht und der (40) mindestens im Erstreckungsbereich der äußeren Bereiche (16) oder der Beaufschlagungsbereiche (14,15) vorgesehen ist.

2. Drehschwingungsdämpfer nach Anspruch 1, **dadurch gekennzeichnet, dass** in der Kammer (21), mindestens eines der die Kammer (21) bildenden Bestandteile den magnetisierten Bereich (40) radial außerhalb der äußeren Bereiche (16) des flanschartigen Bauteils (20) aufweist.

3. Drehschwingungsdämpfer nach Anspruch 1, **dadurch gekennzeichnet, dass** in der ringförmigen Kammer (21), radial außerhalb zumindest eines der äußeren Bereiche (16) des flanschartigen Bauteils (20), an wenigstens einem, der die Kammer (21) bildenden Bestandteile, mindestens eine Aufnahme zur Befestigung eines zur Bildung des magnetisierten Bereiches dienenden Elementes (40) vorgesehen ist.

4. Drehschwingungsdämpfer nach Anspruch 1, **dadurch gekennzeichnet, dass** das Element (40) ein Magnet ist.

5. Drehschwingungsdämpfer nach Anspruch 3, **dadurch gekennzeichnet, dass** zwischen dem Element (40) und den äußeren Bereichen (16) des flanschartigen Bauteils (20) ein radialer Abstand ist.

6. Drehschwingungsdämpfer nach Anspruch 3, **dadurch gekennzeichnet, dass** das magnetische Element (40) eine winkelmäßige Ausdehnung in Umfangrichtung der Kammer (21) hat, die maximal der winkelmäßigen Ausdehnung des radial gegenüberliegenden äußeren Bereiches (16) des flanschartigen Bauteils (20) in Umfangrichtung entspricht.

7. Drehschwingungsdämpfer nach einem der Ansprüche 1, 2, 3, 5 oder 6, **dadurch gekennzeichnet, dass** radial außerhalb der äußeren Bereiche (16) des flanschartigen Bauteils (20), in mindestens einem, der die Kammer (21) bildenden Bestandteile, mindestens eine Bohrung, welche in die Kammer mündet, vorgesehen ist.

8. Drehschwingungsdämpfer nach Anspruch 7, **dadurch gekennzeichnet, dass** in die Bohrung ein magnetisiertes Bauteil, wie beispielsweise eine Magnetschraube einfügbar ist.

9. Verfahren zur Verminderung der Wirksamkeit von Abriebteilchen in einem Drehschwingungsdämpfer nach wenigstens einem der vorhergehenden Ansprüche, wobei die ferromagnetischen Abriebteilchen in vorgegebenen Bereichen der Kammer (21) des Drehschwingungsdämpfers mittels magnetischer Anziehung angesammelt werden.

10. Verfahren nach Anspruch 9, **dadurch gekennzeichnet, dass** die ferromagnetischen Abriebteilchen durch wenigstens ein magnetisches Bauteil angesammelt werden.

## Claims

1. Torsional vibration damper with at least one first (17) and one second (18) structural element, the first and the second structural element being rotatable counter to the resistance of at least one energy accumulator, and the structural elements possessing action regions for compressing the energy accumulator (7) formed by at least one helical spring (8, 9, 10), one of the structural elements having components forming an annular chamber (21) in which the helical spring is received and which is filled at least partially with viscous medium, the first structural element being connectable to an output shaft of an engine and the second structural element being connectable to a gear shaft, one of the structural elements comprising a flange-like structural part (20) which engages at least with radially outer regions (16) into the annular chamber (21) of the second structural element for action upon the at least one helical spring, action regions, adjacent to the outer regions (16), of the components which form the chamber (21) being present when the torsional vibration damper is in the position of rest, **characterized in that** in the chamber (21) there is at least one magnetized region (40) which attracts ferromagnetic substances and which (40) is provided at least in the area of extent of the outer regions (16) or of the action regions (14, 15).

2. Torsional vibration damper according to Claim 1, **characterized in that**, in the chamber (21), at least one of the components which form the chamber (21) has the magnetized region (40) radially outside the outer regions (16) of the flange-like structural part (20).

3. Torsional vibration damper according to Claim 1, **characterized in that** at least one receptacle for fastening an element (40) serving for forming the magnetized region is provided in the annular chamber (21), radially outside at least one of the outer regions (16) of the flange-like structural part (20), on at least one of the components which form the chamber (21).

4. Torsional vibration damper according to Claim 3, **characterized in that** the element (40) is a magnet.

5. Torsional vibration damper according to Claim 3, **characterized in that** a radial clearance is present between the element (40) and the outer regions (16) of the flange-like structural part (20).

6. Torsional vibration damper according to Claim 3, **characterized in that** the magnetic element (40) has, in the circumferential direction of the chamber (21), an angular extent which corresponds at most to the angular extent of the radially opposite outer region (16) of the flange-like structural part (20) in the circumferential direction.

7. Torsional vibration damper according to one of Claims 1, 2, 3, 5 or 6, **characterized in that**, in at least one of the components which form the chamber (21), at least one bore, which issues into the chamber, is provided radially outside the outer regions (16) of the flange-like structural part (20).

8. Torsional vibration damper according to Claim 7, **characterized in that** a magnetized structural part, such as, for example, a magnetic screw, can be inserted into the bore.

9. Method for reducing the effectiveness of abrasion particles in a torsional vibration damper according to at least one of the preceding claims, the ferromagnetic abrasion particles being accumulated by means of magnetic attraction in predetermined regions of the chamber (21) of the torsional vibration damper.

10. Method according to Claim 9, **characterized in that** the ferromagnetic abrasion particles are accumulated by means of at least one magnetic structural part.

## Revendications

1. Amortisseur de vibrations de torsion comprenant au moins un premier (17) et un deuxième (18) élément modulaire, le premier et le deuxième élément modulaire pouvant tourner à l'encontre de la résistance d'au moins un accumulateur d'énergie, et les éléments modulaires possédant des régions de sollicitation pour comprimer l'accumulateur d'énergie (7) formé par au moins un ressort à boudin (8, 9, 10), l'un des éléments modulaires présentant des constituants qui forment une chambre annulaire (21), dans laquelle est reçu le ressort à boudin, et qui est au moins en partie remplie d'un milieu visqueux, le premier élément modulaire pouvant être connecté à un arbre de sortie d'un moteur et le deuxième élément modulaire pouvant être connecté à un arbre de transmission, l'un des éléments modulaires comprenant un composant de type bride (20), qui vient en prise au moins avec des régions radialement extérieures (16) pour solliciter l'au moins un ressort à boudin dans la chambre annulaire (21) du deuxième élément modulaire, des régions de sollicitation des constituants formant la chambre (21), adjacentes aux régions extérieures (16), étant prévues dans la position de repos de l'amortisseur de vibrations de torsion, **caractérisé en ce qu'**au moins une région aimantée (40) existe dans la chambre (21), laquelle attire des matières ferromagnétiques et qui (40) est prévue au moins dans la région de l'étendue des régions extérieures (16) ou des régions de sollicitation (14, 15).

2. Amortisseur de vibrations de torsion selon la revendication 1, **caractérisé en ce que** dans la chambre (21), au moins l'un des constituants formant la chambre (21) présente la région aimantée (40) radialement en dehors des régions extérieures (16) du composant de type bride (20).

3. Amortisseur de vibrations de torsion selon la revendication 1, **caractérisé en ce que** dans la chambre annulaire (21), radialement en dehors d'au moins l'une des régions extérieures (16) du composant de type bride (20), sur au moins l'un des constituants formant la chambre (21), est prévu au moins un logement pour la fixation d'un élément (40) servant à la formation de la région aimantée.

4. Amortisseur de vibrations de torsion selon la revendication 3, **caractérisé en ce que** l'élément (40) est un aimant.

5. Amortisseur de vibrations de torsion selon la revendication 3, **caractérisé en ce qu'**entre l'élément (40) et les régions extérieures (16) du composant de type bride (20) existe une distance radiale.

6. Amortisseur de vibrations de torsion selon la revendication 3, **caractérisé en ce que** l'élément magnétique (40) a une dimension angulaire dans la direction périphérique de la chambre (21) qui correspond au maximum à la dimension angulaire de la région extérieure radialement opposée (16) du composant de type bride (20) dans la direction périphérique.

7. Amortisseur de vibrations de torsion selon l'une quelconque des revendications 1, 2, 3, 5 ou 6, **caractérisé en ce que** radialement en dehors des régions extérieures (16) du composant de type bride (20), dans au moins l'un des constituants formant la chambre (21), est prévu au moins un alésage qui débouche dans la chambre.

8. Amortisseur de vibrations de torsion selon la revendication 7, **caractérisé en ce que** dans l'alésage peut être introduit un composant aimanté comme par exemple une vis magnétique.

9. Procédé pour réduire l'efficacité de particules abrasives dans un amortisseur de vibrations de torsion selon au moins l'une quelconque des revendications précédentes, les particules abrasives ferromagnétiques étant accumulées dans des régions prédéfinies de la chambre (21) de l'amortisseur de vibrations de torsion au moyen d'une attraction magnétique.

10. Procédé selon la revendication 9, **caractérisé en ce que** les particules abrasives ferromagnétiques sont accumulées par au moins un composant magnétique.
